Europäisches Patentamt

European Patent Office

Office européen des brevets

(11) Veröffentlichungsnummer: **0 230 930**
**B1**

(12) **EUROPÄISCHE PATENTSCHRIFT**

(45) Veröffentlichungstag der Patentschrift:
18.04.90

(51) Int. Cl.⁴: **H02M 3/335**

(21) Anmeldenummer: 87100536.9

(22) Anmeldetag: 16.01.87

(54) Schaltnetzteil für ein fernbedienbares Gerät.

(30) Priorität: 22.01.86 DE 3601738

(43) Veröffentlichungstag der Anmeldung:
05.08.87 Patentblatt 87/32

(45) Bekanntmachung des Hinweises auf die Patenterteilung:
18.04.90 Patentblatt 90/16

(84) Benannte Vertragsstaaten:
AT BE CH DE ES FR GB GR IT LI LU NL SE

(56) Entgegenhaltungen:
EP-A- 0 167 737
EP-A- 0 223 171

(73) Patentinhaber: Deutsche Thomson-Brandt GmbH,
Hermann-Schwer-Strasse 3 Postfach 1307,
D-7730 Villingen-Schwenningen(DE)

(72) Erfinder: Gleim, Günter, Dipl.-Ing., Oberer
Sonnenbühl 22, D-7730 Villingen 22(DE)
Erfinder: Hartmann, Uwe, Ing.-grad., Tallard Strasse 15,
D-7730 VS-Villingen(DE)
Erfinder: Mai, Udo, Ing.-grad., Mühleschweg 2,
D-7730 VS-Villingen(DE)

(74) Vertreter: Einsel, Robert, Dipl.-Ing., Deutsche
Thomson-Brandt GmbH Patent- und Lizenzabteilung
Göttinger Chaussee 76, D-3000 Hannover 91(DE)

## Beschreibung

Bei Geräten der Nachrichtentecknik wie z.B. einem Fernsehempfänger ist es bekannt, die für die einzelnen Stufen notwendigen Betriebsspannungen mit einem Schaltnetzteil aus der Netzspannung zu erzeugen. Ein Schaltnetzteil ermöglicht die für den Anschluß äußerer Geräte und für die Maßnahmen zur Isolierung vorteilhafte galvanische Trennung der Empfängerschaltung vom Netz. Da ein Schaltnetzteil mit einer gegenüber der Netzfrequenz hohen Frequenz arbeitet, kann der zur galvanischen Trennung dienende Schaltnetzteiltransformator gegenüber einem Netztransformator für 50 Hz wesentlich kleiner und leichter ausgebildet sein. Durch mehrere Wicklungen oder Wicklungabgriffe und angeschlossene Gleichrichter können auf der Sekundärseite des Schaltnetzteiltransformators Betriebsspannungen unterschiedlicher Größe und Polarität erzeugt werden.

Es sind mit der Zeilenfrequenz synchronisierte Schaltnetzteile für Fernsehempfänger bekannt, bei denen der Schalttransistor von einer sekundärseitig angeorneten integrierten Schltung (TEA 2029) über eine galvanische Trennung lastabhängig durch Impulsbreitenmodulation gesteuert wird. Ein derartiges Netzteil ist in der Anmeldung DE-P 34 36 555.9 beschrieben. Bei Anlegen einer Versorgungsspannung startet die integrierte Schaltung, indem der Impulsbreitenmodulator zunächst mit Impulsen kleiner Breite beginnt und dadurch ein weiches Einschalten bewirkt.

Ein Großteil der Fernsehempfänger ist fernbedienbar und daher für den "standby"-Betrieb mit einer vom Schaltnetzteil unabhängigen Versorgung für den Fernbedienungsempfänger ausgerüstet. Diese arbeiten zum Teil mit einem 50 Hz Zusatzteil, oder das gesamte Schaltnetzteil wird in einem "Sparbetrieb" z.B. mit herabgesetzten oder abgeschalteten Spannungen auf der Sekundärseite betrieben.

Aus der Patentschrift DE-P 32 27 152 ist ein Schaltnetzteil ohne Bereitschaftsbetrieb bekannt, bei dem auf der netzverbundenen Seite ein Oszillator vorgesehen ist, der bei Fehlen eines horizontalfrequenten Spannungsregelsignales während einer Anlaufphase nach dem Einschalten frei schwingt. Der Schalttransistor ist so angesteuert, daß auf der netzgetrennten Seite des Schaltnetzteiltransformators Spannungen entstehen, die zum Anlauf des Horizontalablenkteiles ausreichen. Der Startoszillator wird in einere spätere Phase durch das sekundärseitig erzeugte horizontalfrequente Spannungsregelsignal synchronisiert und danach abgeschaltet.

Ferner ist es aus der europäischen Patentanmeldung EP-A 223 171, die nicht veröffentlicht ist, für ein Schaltnetzteil mit Startoszillator ohne Bereitschaftsbetrieb bekannt, den auf der netzverbundenen Seite angeordneten Startoszillator für die Ansteuerung des Schalttransistors nach dem Einschalten, zunächst mit Impulsen kleiner Breite und niedriger Frequenz anschwingen zu lassen. Während des Startvorganges werden diese Impulse durch die Anlaufschaltung kontinuierlich verbreitert, wodurch die Sekundärspannungen im Schaltnetzteil ansteigen und der auf der Sekundärseite angeordnete Impulsbreitenmodulator (TEA 2029) seine Funktion aufnimmt. Dieser Impulsbreitenmodulator liefert ebenso wie der Startoszillator zunächst Impulse kleiner Breite, aber höherer Frequenz, nämlich mit Zeilenfrequenz. Dadurch wird der Startoszillator außer Funktion gesetzt und der Impulsbreitenmodulator übernimmt die weitere Steuerung des Schalttransistors.

Diese bekannten Schaltnetzteile mit Startoszillator haben den Nachteil, daß sie ohne zusätzliche Aufwendungen für Geräte mit Fernbedienung nicht eingesetzt werden können.

Es ist Aufgabe der Erfindung, ein Schaltnetzteil für ein fernbedienbares Gerät mit Startoszillator aufzuzeigen, welches ohne zusätzliche Aufwendungen wie z.B. ein netztrennendes 50 Hz-Zusatznetzteil für das fernbedienbare Empfangsteil auskommt.

Diese Aufgabe wird durch ein Schaltnetzteil nach dem Oberbegriff des Anspruchs 1, durch die im Kennzeichen des Anspruchs 1 beschriebenen Merkmale gelöst. Weiterbildungen der Erfindung sind in den Unteransprüchen beschrieben.

Im Prinzip wird das fernbedienbare Empfangsteil des Fernsehempfängers ebenso wie der Startoszillator und eine dem Fernbedienempfänger nachgeschalteten Auswerteschaltung auf der netzverbundenen Seite des Schaltnetzteiles angeordnet. Die Spannungsversorgung für diese Teile erfolgt direkt aus dem Netz durch Gleichrichtung und Siebung.

Die Funktionen Ein- und Aus werden auf der netzverbundenen Seite ausgewertet und durchgeführt, während die anderen Bedienfunktionen, wie Senderwahl, Helligkeits- und Kontrastregelung usw. über eine Netztrennung, z.B. einen Optokoppler auf die Sekundärseite einem diese Funktionen steuernden Mikroprozessor übertragen werden. Diese Befehle können erst ausgeführt werden, wenn das Schaltnetzteil seine Funktion aufgenommen hat und der Mikroprozessor mit Spannung aus dem Schaltnetzteil versorgt wird.

Sowohl Aus- als auch Ein-Funktion werden über die Auswerteschaltung gesteuert, wobei z.B. eine monostabile Kippstufe angesteuert wird, die auch gleichzeitig als elektronische Sicherung wirkt. Diese Schaltung schaltet z.B. bei Überstrom das Schaltnetzteil und damit den Fernsehempfänger außer Betrieb.

An Hand einer Figur soll die Erfindung näher erläutert werden.

Sie zeigt in einer beispielhaften Ausführungsform ein Schaltbild für ein Schaltnetzteil eines fernbedienbaren Gerätes mit Startoszillator und Bereitschaftsbetrieb. Der Fernbedienempfänger 1 steuert die Ein- und Aus-Funktion über seine Ausgangsleitung B, während die anderen Befehle wie Senderwahl, Helligkeit- oder Kontraststeuerung usw. über die Leitung A einem auf der Sekundärseite des Schaltnetzteiltransformators 21 angeordneten nicht dargestellten Mikroprozessor über eine Netztrennung 11 mit Ausgang E übermittelt werden. Die Netztrennung 11 kann als Optokoppler oder Transformator ausgeführt sein.

Die Anlaufschaltung mit Startoszillator wird aus den Transistoren 3 und 4 gebildet. Für den Einschaltvorgang werden diese Transistoren über Diode 2 sowie über die Widerstände 5 und 6 direkt ohne Netztrennung mit Gleichspannung versorgt. Der Mittelpunkt der Reihenschaltung der Widerstände 5 und 6 ist an den Emitter von Transistor 8 angeschlossen, der in Verbindung mit Transistor 9 die Ausführung der vom Fernbedienempfänger abgegebene Ein- und Aus-Funktionen bewirkt. In der Aus-Funktion ist Transistor 8 durchgeschaltet und schaltet dadurch den Mittelpunkt der Widerstände 5 und 6 gegen Masse, so daß die Transistoren 3 und 4, die die Anlaufschaltung mit Startoszillator bilden, ohne Funktion sind. Transistor 8 und Transistor 9 sind als monostabile Kippstufe geschaltet, die einerseits vom Fernbediengeber über die Leitung B angesteuert wird und andererseits bei Überstrom in Schalttransistor 13 durch einen Spannungsabfall am Meßwiderstand 12. Sie wirkt als Schutzschaltung für das Schaltnetzteil, indem die monostabile Kippstufe bei Durchschalten von Transistor 9 die Diode 10 nach Masse legt, und dadurch eine Unterbrechung der Ansteuerung von Schalttransistor 13 bewirkt.

Durch einen negativen Impuls auf Leitung B wird das Gerät eingeschaltet, indem die Transistoren 8 und 9 stromlos gesteuert werden. Dadurch kann die Gleichspannung von Diode 2 über Widerstand 6 den Kondensator 7 aufladen. Bei etwa +3 V an Kondensator 7 beginnt der Startoszillator an zu schwingen. Durch die Beschaltung ergibt sich eine Frequenz von etwa 13 kHz. Die Spannungsversorgung für die den Schalttransistor 13 ansteuernden, in Gegentakt geschalteten Transistoren 14 und 15 sowie für Vorstufentransistor 16 erfolgt während der Anlaufphase über die als Leuchtdiode ausgebildete Diode 17. Diese dient am Anfang der Anlaufphase und auch während des Bereitschaftsbetriebes als Anzeige für den Bereitschaftsbetrieb. Nachdem die Spannungen im Schaltnetzteil angestiegen sind und die Spannung an Kondensator 18 einen bestimmten Wert überschreitet, wird die Diode 17 stromlos.

Mit steigender Spannung an Kondensator 7 verkleinert sich das Tastverhältnis im Startoszillator. Dadurch ändert sich der Stromflußwinkel im Schalttransistor 13 direkt proportional zu der an Kondensator 7 anliegenden Spannung. Durch die in Reihe mit dem Schalttransistor 13 liegende Arbeitswicklung 26 des Schaltnetzteiltransformators 21 werden in den sekundärseitigen Wicklungen 27 - 31 Spannungen induziert, ein Ansteigen der Versorgungsspannungen erfolgt. Bei einer bestimmten Größe dieser Versorgungsspannungen nimmt der Impulsbreitenmodulator 22 in der integrierten Schaltung TEA 2029 seine Funktion auf und liefert über die Netztrennung 19 zeilenfrequente Impulse mit zunächst großem Tastverhältnis an die Basis von Transistor 16. Bei Eintreffen der ersten Impulse wird der mit niedrigerer Frequenz schwingende Startoszillator außer Funktion gebracht und die Steuerung für den Schalttransistor 13 wird zeilenfrequent vom Impulsbreitenmodulator 22 übernommen. Die endgültige Abschaltung des Startoszillators geschieht als Folge des Ansteigens der Spannung an Kondensator 18. Sie wird über Diode 20, Zenerdiode 23 und Widerstand 24 an die Basis von Transistor 3 gelegt, der dadurch stromführend wird.

Die beiden Netztrennungen 11 und 19 können auch zu einem Bauteil zusammengefaßt werden, in dem z.B. zwei Optokoppler in einem Gehäuse angeordnet sind.

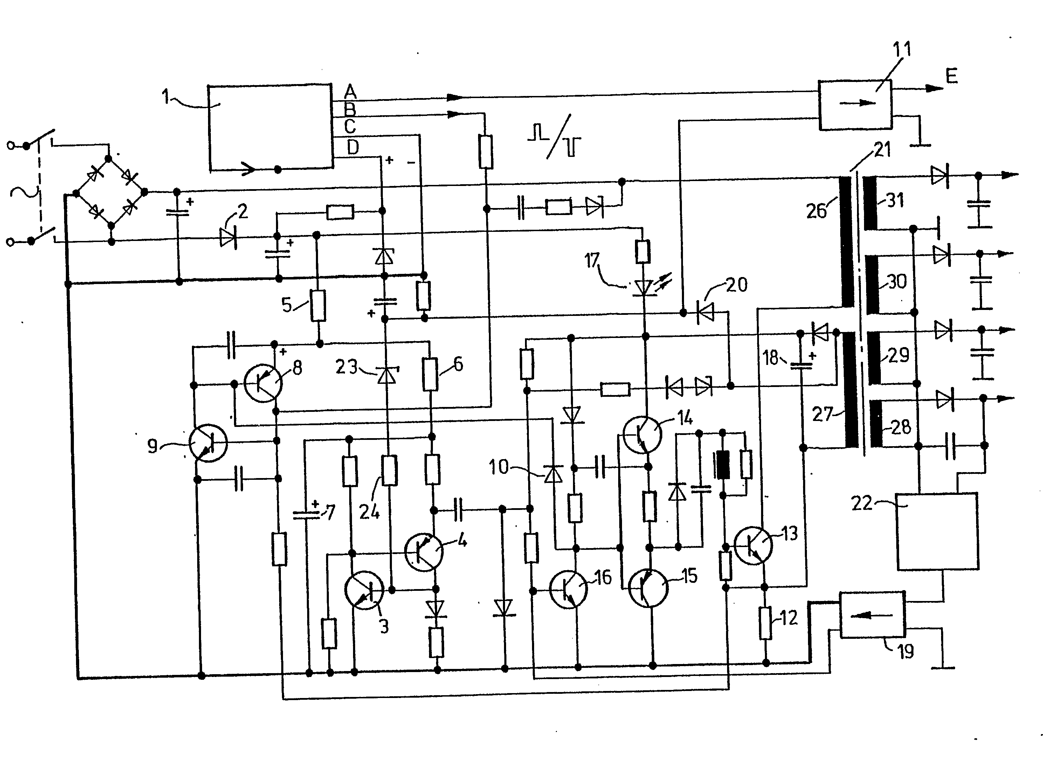

## Patentansprüche

1. Schaltnetzteil für ein fernbedienbares Gerät, insbesondere für ein Fernsehgerät, mit einer auf der netzverbundenen Seite des Schaltnetzteiltransformators (21) angeordneten Anlaufschaltung für den Schalttransistor (13) und einer ebenfalls auf der netzverbundenen Seite angeordneten Schutzschaltung für den Schalttransistor (13), aufweisend folgende Merkmale:

   a) Das Fernbedienungsempfangsteil (1) ist auf der netzverbundenen Seite angeordnet und wird mit einer direkt aus dem Netz erzeugten Betriebsspannung versorgt,

   b) die fernbedienbaren Ein- und Aus-Befehle werden einer netzverbundenen Auswerteschaltung zugeführt, die auf der netzverbundenen Seite die Schaltbefehle auslöst,

   c) alle anderen fernbedienbaren Befehle werden über eine Netztrennung (11) einer Verarbeitungsschaltung (μ P) zugeführt,

   d) die Anlaufschaltung wird während des Anlaufvorganges bei Ansteigen von Sekundärspannungen im Schaltnetzteiltransformator (21), durch einen sekundärseitig angeordneten, über eine Netztrennung (19) Steuersignale liefernden Impulsbreitenmodulator (22) abgelöst.

2. Schaltnetzteil nach Anspruch 1, dadurch gekennzeichnet, daß die fernbedienbaren Aus-Befehle durch die Schutzschaltung für den Schalttransistor (13) durchgeführt werden.

3. Schaltnetzteil nach Anspruch 1 oder Anspruch 2, dadurch gekennzeichnet, daß die Schutzschaltung eine monostabile Kippstufe ist.

4. Schaltnetzteil nach einem der Ansprüche 1 bis 3, dadurch gekennzeichnet, daß die Netztrennungen (11,19) Optokoppler sind.

5. Schaltnetzteil nach Anspruch 4, dadurch gekennzeichnet, daß die Netztrennungen (11,19) in einem gemeinsamen Gehäuse angeordnet sind.

6. Schaltnetzteil nach einem der Ansprüche 1 bis 3, dadurch gekennzeichnet, daß die Netztrennungen (11,19) durch einen Transformator gebildet sind.

7. Schaltnetzteil nach Anspruch 1, dadurch gekennzeichnet, daß Anlaufschaltung, Ansteuerschaltung und Schutzschaltung für den Schalttransistor (13) sowie die Auswerteschaltung für die Ein- und Aus-Befehle in einem integrierten Schaltkreis zusammengefaßt sind.

8. Schaltnetzteil nach Anspruch 1, dadurch gekennzeichnet, daß die vom Impulsbreitenmodulator gelieferten Steuersignale zeilenfrequent sind.

## Claims

1. A switched-mode power supply for a device which can be remote-controlled, particularly for a television set, having a starting circuit for the switching transistor (13), which circuit is disposed at the side of the switched-mode power supply transformer (21) connected to the mains, and a protective circuit or the switching transistor (13), likewise disposed at the side connected to the mains, comprising the following features:

a) The remote-control receiving section (1) is disposed at the side connected to the mains and is supplied with an operating voltage produced directly from the mains,

b) the remotely controllable on and off instructions are fed to an evaluation circuit which is connected to the mains and releases the switching instructions at the side connected to the mains,

c) all other remotely controllable instructions are fed via a mains isolator (11) to a processing circuit ($\mu$ P),

d) during the starting operation when the secondary voltages are rising in the switched-mode power supply transformer (21), the starting circuit is separated by a pulse width modulator (22) disposed at the secondary side and delivering control signals via a mains isolator (19).

2. A switched-mode power supply according to claim 1, characterised in that the remotely controllable off instructions are carried out by the protective circuit for the switching transistor (13).

3. A switched-mode power supply according to claim 1 or claim 2, characterised in that the protective circuit is a monostable flip-flop.

4. A switched-mode power supply according to one of claims 1 to 3, characterised in that the mains isolators (11, 19) are optical couplers.

5. A switched-mode power supply according to claim 4, characterised in that the mains isolators (11, 19) are arranged in a common housing.

6. A switched-mode power supply according to one of claims 1 to 3, characterised in that the mains isolators (11, 19) are formed by a transformer.

7. A switched-mode power supply according to claim 1, characterised in that the starting circuit, the switching circuit and the protective circuit for the switching transistor (13), and also the evaluation circuit for the on and off instructions, are combined in an integrated circuit.

8. A switched-mode power supply according to claim 1, characterised in that the control signals supplied by the pulse-width modulator are at line frequency.

## Revendications

1. Bloc d'alimentation secteur commuté pour un appareil pouvant être télécommandé, notamment pour un appareil de télévision, comportant un circuit de démarrage, disposé sur le côté, relié au secteur, du transformateur (21) du bloc d'alimentation secteur commuté, pour le transistor de commutation (13) et un circuit de protection, également disposé sur le côté relié au secteur, pour le transistor de commutation (13), et présentant les caractéristiques suivantes:

a) la partie réception (1) de la télécommande est disposée sur le côté relié au secteur et est alimentée par une tension d'alimentation produite directement à partir du secteur,

b) les ordres de branchement et d'arrêt, qui peuvent être transmis par télécommande, sont envoyés à un circuit d'évaluation, qui est raccordé au secteur et déclenche, sur le côté relié au secteur, les ordres de commutation,

c) tous les autres ordres pouvant être transmis par télécommande, sont envoyés par l'intermédiaire d'une unité (11) de séparation du secteur à un circuit de traitement ($\mu$ P),

d) le circuit de démarrage est déconnecté, pendant l'opération de démarrage lors de l'accroissement de tensions secondaires dans le transformateur (21) du bloc d'alimentation secteur commuté, au moyen d'un modulateur d'impulsions en durée (22) qui est situé au secondaire et délivre des signaux de commande par l'intermédiaire d'une unité (19) de séparation du secteur.

2. Bloc d'alimentation secteur commuté, caractérisé en ce que les ordres d'arrêt, qui peuvent être envoyés par télécommande, sont exécutés par le circuit de protection prévu pour le transistor de commutation (13).

3. Bloc d'alimentation secteur commuté selon la revendication 1 ou 2, caractérisé en ce que le circuit de protection est un étage à bascule monostable.

4. Bloc d'alimentation secteur commuté selon l'une des revendications 1 à 3, caractérisé en ce que les unités (11, 19) de séparation du secteur sont des optocoupleurs.

5. Bloc d'alimentation secteur commuté selon la revendication 4, caractérisé en ce que les unités (11, 19) de séparation du secteur sont disposées dans un boîtier commun.

6. Bloc d'alimentation secteur commuté selon l'une des revendications 1 à 3, caractérisé en ce que les unités (11, 19) de séparation du secteur sont formées par un transformateur.

7. Bloc d'alimentation secteur commuté selon la revendication 1, caractérisé en ce que le circuit de démarrage, le circuit de commande et le circuit de protection prévus pour le transistor de commutation (13) ainsi que le circuit d'évaluation prévu pour les ordres de branchement et d'arrêt sont rassemblés dans un circuit intégré.

8. Bloc d'alimentation secteur commuté selon la revendication 1, caractérisé en ce que la fréquence des signaux de commande délivrés par le modulateur d'impulsions en durée est égale à la fréquence des lignes.